(19) Europäisches Patentamt
European Patent Office
Office européen des brevets

(11) **EP 4 491 702 A1**

(12) **EUROPEAN PATENT APPLICATION**
published in accordance with Art. 153(4) EPC

(43) Date of publication:
**15.01.2025 Bulletin 2025/03**

(21) Application number: 23795205.6

(22) Date of filing: **21.04.2023**

(51) International Patent Classification (IPC):
*C12G 3/024* (2019.01)    *C12G 3/04* (2019.01)
*C12G 1/022* (2006.01)    *C12G 1/00* (2019.01)
*A23L 2/02* (2006.01)

(86) International application number:
**PCT/CN2023/089668**

(87) International publication number:
**WO 2023/207772 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.04.2022   CN 202210448107**

(71) Applicant: Angel Yeast Co., Ltd
Yichang, Hubei 443003 (CN)

(72) Inventors:
• QIN, Xianwu
Yichang, Hubei 443003 (CN)
• XU, Yinhu
Yichang, Hubei 443003 (CN)
• LI, Zhijun
Yichang, Hubei 443003 (CN)
• CHEN, Hui
Yichang, Hubei 443003 (CN)
• LIU, Xiuji
Yichang, Hubei 443003 (CN)
• YAO, Jun
Yichang, Hubei 443003 (CN)

(74) Representative: karo IP
Patentanwälte PartG mbB
Steinstraße 16-18
40212 Düsseldorf (DE)

(54) **BIOLOGICAL ANTIOXIDANT FOR FRUIT JUICE AND FRUIT WINE, PREPARATION METHOD THEREFOR, AND USE THEREOF**

(57)    Provided is a biological antioxidant for fruit juice and fruit wine, a preparation method therefor, and use thereof. The biological antioxidant comprises the following components in parts by weight: 1-70 parts of yeast protein extract and 1-30 parts of chitosan. Amino acids in the yeast protein extract include one or two or more of proline, tryptophan, histidine, tyrosine, and methionine. The biological antioxidant further comprises a peptide substance, nucleic acid, and vitamin C. The peptide substance is selected from one or two or more of glutamylcysteine, honuocysteine, acetylcysteine, cysteine, and glutathione. The preparation method for the biological antioxidant comprises: mixing the components to obtain the biological antioxidant. The biological antioxidant for the fruit juice and fruit wine is beneficial to inhibiting the yellowing and browning of the fruit juice and fruit wine, improving the beauty of the color and aroma of the fruit juice and fruit wine, and improving the sensory quality. It also increases the drinking comfort of the fruit juice and fruit wine and enables the fruit juice and fruit wine to be mellow and full in taste and lasting in aftertaste.

**EP 4 491 702 A1**

## Description

## Technical Field

The present disclosure relates to the technical field of antioxidants, in particular to a biological antioxidant for fruit juice and fruit wine, a preparation method therefor, and use thereof.

## Background Art

Most fruits can be processed and pressed or extracted to produce fruit juice beverages. The low-alcoholic beverages obtained by alcoholic fermentation of fruit juice with saccharomyces cerevisiae are called fruit wine. The fruit juice and fruit wine can greatly improve the utilization value of fruit agricultural products and farmers' income. Fruit juice and fruit wine have natural, nutritional, and healthy attributes. After deep processing, in most cases the color is beautiful and attractive, terpenoid aromatic substances are rich, and a variety of vitamins, minerals, trace elements and bioactive substances can be supplemented to the human body, with high nutritional value and health functions. Therefore, the deep processing of fruit juice and fruit wine is the main direction of comprehensive utilization of fruit agricultural products, and also in line with national agricultural development policies.

Except for the simple physical form changes, most processing and storage processes of the fruit juice and fruit wine contain abundant easily oxidizable substances, such as phenolics, oxidases, metal ions, etc. It is very easy for these substances to cause oxidative browning of fruit juice and fruit wine and the loss of terpenoid aromatic substances and characteristic aroma, which has become a common problem in fruit juice and fruit wine processing enterprises, and is one of the key factors restricting the sustainable and high-quality development of fruit juice and fruit wine processing industry in china.

For the value preservation and value increase of fruit juice and fruit wine products, it is necessary to minimize the oxidative browning and the loss of terpenoid aromatic substances and characteristic aroma to the maximum extent. Technicians in enterprises will generally adopt two types of treatment processes. One is oxygen-barrier and high-temperature treatment, which inactivates the oxidase as much as possible, but high-temperature treatment will cause the loss of terpenoid aromatic substances, and the requirements for production equipment and process operation are relatively high; the other is to inhibit oxidative browning and aroma loss by adding antioxidant substances such as citric acid, VC, sulfur dioxide and tannin, but the nutritional value of the fruit juice and fruit wine products would be affected, and some antioxidants such as sulfur dioxide have potential risks of becoming allergens against human health.

## Summary of the Invention

The technical problem to be solved by the present disclosure is to provide a biological antioxidant for fruit juice and fruit wine to solve the problems of color browning and oxidation and loss of aroma during processing and storage of fruit juice and fruit wine.

In view of the deficiencies of the prior art, one of the objects of the present disclosure is to provide a biological antioxidant for fruit juice and fruit wine, which replaces the traditional operation processes or the commonly used antioxidant treatment methods during the production, transportation and storage of the fruit juice and fruit wine, so as to achieve the purposes of beautiful color, lasting stability, fresh aroma and improving the quality and efficiency of the fruit juice and fruit wine; a second object of the present disclosure is to provide a preparation method for the biological antioxidant; and a third object of the present disclosure is to provide a use of the biological antioxidant in food products.

Technical solutions of the disclosure:

The present disclosure provides a biological antioxidant for fruit juice and fruit wine, including the following components in parts by weight: 1-70 parts of yeast protein extract and 1-30 parts of chitosan.

Preferably, the biological antioxidant includes the following components in parts by weight: 10-30 parts of yeast protein extract and 10-20 parts of chitosan.

Preferably, amino acids in the yeast protein extract include one or a combination of two or more selected from the group consisting of proline, tryptophan, histidine, tyrosine, and methionine; preferably, the amino acids include 0-1.3wt% proline, 0-3.3wt% tryptophan, 0.51-1.3wt% histidine, 1.67-4wt% tyrosine and 0-0.8wt% methionine on the basis of a total weight of the amino acids; further preferably, the amino acids comprise 0.75-1.3wt% proline, 2.3-3.3wt% tryptophan, 0.58-1.2wt% histidine, 1.67-1.8wt% tyrosine and 0.69-0.8wt% methionine.

Preferably, a proportion of low molecular weight peptides with a molecular weight distribution of 500-3000Da in the yeast protein extract is more than 13%, preferably more than 20%.

Preferably, the yeast protein extract contains one or a combination of two or more selected from the group consisting of manganese ions, iron ions and magnesium ions; preferably, the yeast protein extract contains manganese ions, iron ions and magnesium ions; further preferably, a content of manganese ions is 50-400 ppm, a content of iron ions is 50-400 ppm and a content of magnesium ions is 50-400 ppm.

Preferably, the biological antioxidant further includes a peptide substance; preferably, the peptide substance is one or a combination of two or more selected from the group consisting of glutamylcysteine, honuocysteine, acetylcysteine, cysteine, and glutathione, perferably glutathione; the peptide substance is present in 1-15 parts by weight.

Preferably, the biological antioxidant further includes nucleic acid; preferably, the nucleic acid is present in 1-15 parts by weight.

Preferably, the biological antioxidant further includes vitamin C; preferably, the vitamin C is present in 1-5 parts by weight.

Preferably, in the biological antioxidant, the yeast protein extract is 20-30 parts, the chitosan is 10-15 parts, the glutathione is 7-15 parts, the nucleic acid is 1-15 parts, and the vitamin C is 3-5 parts.

The present disclosure further provides a preparation method for the biological antioxidant, including mixing various components to obtain the biological antioxidant.

The present disclosure further provides a use of the biological antioxidant or of a biological antioxidant prepared with the preparation method in food products, preferably in fruit juice and fruit wine; preferably, the biological antioxidant is added to the fruit juice and fruit wine in an amount of 0.01-0.05wt%, preferably 0.02-0.05wt%.

Advantageous effects of the present disclosure:

The biological antioxidant for fruit juice and fruit wine in the present disclosure is beneficial to inhibiting the yellowing and browning of the fruit juice and fruit wine, improving the beauty of the color and aroma of the fruit juice and fruit wine, and improving the sensory quality. It also increases the drinking comfort of the fruit juice and fruit wine and enables the fruit juice and fruit wine to be mellow and full in taste and lasting in aftertaste. In addition, while improving the quality of the fruit juice and fruit wine, the present disclosure also eliminates the tedious process, high cost, unstable quality and safety risks caused by the high-temperature and oxygen-barrier treatment, meeting the objectives of safe production, high-quality development and healthy drinking by consumers in the fruit juice and fruit wine manufacturing enterprises.

**Detailed Description of the Invention**

It should be noted that the examples and features in the examples in the present disclosure can be combined with each other without conflict. The present disclosure will now be described in detail in combination with the examples.

The present disclosure provides a biological antioxidant for fruit juice and fruit wine, including the following components in parts by weight: 1-70 parts of yeast protein extract and 1-30 parts of chitosan.

In a preferred implementation of the present disclosure, the biological antioxidant includes the following components in parts by weight: 10-30 parts of yeast protein extract and 10-20 parts of chitosan.

The yeast protein extract of the present disclosure is a product prepared by a series of processes from saccharomyces cerevisiae or other species of yeast, and the starting material is commercially available. The yeast protein extract mainly comes from nitrogen-containing substances in yeast cells, mainly amino acids, polypeptides, soluble proteins, minerals and trace elements. Among them, the composition and molecular weight of amino acids will affect their antioxidant capacity. For example, amino acids containing one or two or more of proline, tryptophan, histidine, tyrosine and methionine, preferably proline, tryptophan, histidine, tyrosine and methionine have higher antioxidant capacity; when a proportion of molecular weight distribution in the range of 500-3000Da in the low molecular weight peptide substances (number average molecular weight less than or equal to 3000Da) is greater than 13%, preferably 20%, the oxidation resistance is better; furthermore, when the yeast protein extract contains one or two or more of manganese ions, iron ions and magnesium ions, preferably manganese ions, iron ions and magnesium ions, it is also advantageous to improve the antioxidant properties thereof.

Chitosan, also known as deacetylated chitin, is derived from chitin widely existing in nature through deacetylation, and is known as glycosaminoglycan (1-4)-2-amino-B-D glucose. This kind of natural macromolecular substances are widely used in many fields, such as medicine, food, chemical industry, cosmetics, water treatment, biochemistry and biomedical engineering and so on. In the food areas, it can perform functions such as blood fat and blood sugar reduction, bacteriostasis and impurity removal, clarification and stability, oxidation factor removal and so on. In yet another preferred implementation of the present disclosure, the biological antioxidant further includes a peptide substance; preferably, the peptide substance is selected from one or two or more of glutamylcysteine, honuocysteine, acetylcysteine, cysteine, and glutathione, perferably glutathione; further preferably, the peptide substance is present in 1-15 parts by weight.

In yet another preferred implementation of the present disclosure, the biological antioxidant further includes nucleic acid; preferably, the nucleic acid is present in 1-15 parts by weight. Nucleic acids are widely found in all animal and plant cells and microorganisms, and they are biological macromolecules polymerized from many nucleotides, which is one of the most basic substances of life.

Nucleotides are precursors for the synthesis of biological macromolecules ribonucleic acid (RNA) and deoxyribonucleic acid (DNA). There are mainly four types of nucleotides in RNA: AMP, GMP, CMP and UMP, the precursors for de novo synthesis of these four types of nucleotides are simple substances such as ribose phosphate, amino acid, one-carbon unit and carbon dioxide, all of which are rich in hydrogen ions or reducing ions, and thus have very good ability to scavenge oxidative radicals, DPPH radicals and superoxide anion radicals. The nucleic acid of the present disclosure may be obtained by extraction from microbial cells or may be obtained synthetically, for example from yeast.

In yet another preferred implementation of the present disclosure, the biological antioxidant further includes vitamin C; preferably, the vitamin C is present in 1-5 parts by weight. Vitamin C, also known as ascorbic acid, can provide abundant hydrogen ions, is very sensitive to light, heat and oxygen, and is very easy to be combined for reactions, playing an antioxidant role, reducing the damage of free radicals to skin, food and other substances.

The present disclosure further provides a preparation method for the biological antioxidant, including stirring and mixing various components to obtain the biological antioxidant.

The present disclosure further provides a use of the biological antioxidant in food products, preferably in fruit juice and fruit wine; preferably, the biological antioxidant is added to the fruit juice and fruit wine in an amount of 0.01-0.05wt%, preferably 0.02-0.05wt%. Its addition is small and cost-effective.

Benefits of the present disclosure are further illustrated by the following specific examples.

The raw materials and equipment sources used in the examples of the present disclosure and comparative examples are shown in Table 1.

Table 1 Raw materials and equipment sources used in the examples of the present disclosure and comparative examples

| Raw materials or equipment used | Model\purity | Vendor |
| --- | --- | --- |
| Yeast protein extract | FP1 | AngelYeast Co., Ltd |
| Yeast protein extract | FP2 | AngelYeast Co., Ltd |
| Yeast protein extract | FP3 | AngelYeast Co., Ltd |
| Yeast protein extract | FP4 | AngelYeast Co., Ltd |
| Chitosan | Phosphate type | Golden-Shell Pharmaceutical Co.,Ltd (Zhejiang) |
| Glutathione | Pure product | AngelYeast Co., Ltd |
| Vitamin C | | CSPC Pharmaceutical Group Limited (Hebei) |
| Nucleic acid | I+G | AngelYeast Co., Ltd |
| Sulphurous acid | | Changcheng Chemical Plant (Zibo) |
| Tannin | Brewing type | Chicheng Biotech Co. Ltd. (Wufeng) |
| Citric acid | | Shandong Ensign Industry Co.,Ltd (Weifang) |
| Multi-function colorimeter | NR60CP | Shenzhen Threenh Technology Co., Ltd. |

**Example 1**

1kg of yeast protein extract and 1kg of chitosan are weighed, added into a stirring tank, stirred and mixed to obtain a biological antioxidant of Example 1, wherein the yeast protein extract is model FP1 of AngelYeast Co., Ltd. and the physical and chemical requirements are as follows: a total nitrogen content is 9.2% (by dry basic weight), an amino acid-state nitrogen content is 3.5% (by dry basic weight), and an amino acid composition is as follows (by total weight of amino acids): 1.3% histidine, 3.4% isoleucine, 5% leucine, 6% lysine, 0.8% methionine, 0.2% cystine, 1.5%% phenylalanine, 4.0% tyrosine, 3.2% threonine, 4% valine, 6.9% aspartic acid, 2.8% serine, 9.7% glycine, 4.8% alanine, 0.8% methionine and 4.3% arginine, a proportion of a molecular weight distribution of low molecular weight peptides at 500-3000Da is 14.6%, a mass content of $Ca^{2+}$ is 100 ppm, and a mass content of $Zn^{2+}$ is 80 ppm.

**Example 2**

70kg of the yeast protein extract and 30kg of chitosan are weighed, added into a stirring tank, and stirred and mixed to obtain a biological antioxidant of Example 2, wherein the yeast protein extract is model FP1 of AngelYeast Co., Ltd.

**Example 3**

35kg of the yeast protein extract and 15kg of chitosan are weighed, added into a stirring tank, and stirred and mixed to obtain a biological antioxidant of Example 3, wherein the yeast protein extract is model FP1 of AngelYeast Co., Ltd.

**Example 4**

10 kg of yeast protein extract, 20 kg of chitosan, 1 kg of glutathione, 7 kg of nucleic acid I+G and 1 kg of vitamin C are weighed, added into a stirring tank, and stirred and mixed to obtain a biological antioxidant of Example 4, wherein the yeast protein extract is model FP1 of AngelYeast Co., Ltd.

**Example 5**

30 kg of yeast protein extract, 10 kg of chitosan, 15 kg of glutathione, 1 kg of nucleic acid I+G and 5 kg of vitamin C are weighed into a stirring tank, and stirred and mixed to obtain a biological antioxidant of Example 5, wherein the yeast protein extract is model FP1 of AngelYeast Co., Ltd.

**Example 6**

1kg of the yeast protein extract and 1kg of chitosan are weighed, added into a stirring tank, and stirred and mixed to obtain a biological antioxidant of Example 6. The yeast protein extract is model FP2 of AngelYeast Co., Ltd. and the physical and chemical requirements are as follows: a total nitrogen content is 9.6% (by dry basic weight), an amino acid-state nitrogen content is 4.1% (by dry basic weight), and an amino acid composition is as follows (by total weight of amino acids): 0.75% proline, 3.3% tryptophan, 0.58% histidine, 1.67% tyrosine, 0.69% methionine, 1.6% aspartic acid, 1.4% threonine, 1.5% serine, 5.8% glutamic acid, 1% glycine, 6.5% alanine, 2.4% valine, 1.8% isoleucine, 3% leucine, 1.8% lysine and 2.1% arginine, a proportion of a molecular weight distribution of low molecular weight peptides at 500-3000Da is 18.2%, and a mass content of selenium is 500 ppm.

**Example 7**

1kg of yeast protein extract and 1kg of chitosan are weighed, added into a stirring tank, and stirred and mixed to obtain a biological antioxidant of Example 7. The yeast protein extract is model FP3 of AngelYeast Co., Ltd. and the physical and chemical requirements are as follows: a total nitrogen content is 10.3% (by dry basic weight), an amino acid-state nitrogen content is 3.9% (by dry basic weight), and an amino acid composition is as follows (by total weight of amino acids): 0.67% proline, 0.51% histidine, 2.43% tyrosine, 2.6% aspartic acid, 0.78% threonine, 0.24% serine, 9.8% glutamic acid, 1.75% glycine, 7.4% alanine, 1.7% valine, 0.34% isoleucine, 0.38% leucine, 0.67% lysine and 0.87% arginine, a proportion of a molecular weight distribution of low molecular weight peptides at 500-3000Da is 24.5%, a mass content of $Ca^{2+}$ is 200 ppm, and a mass content of $Zn^{2+}$ is 100 ppm.

**Example 8**

1kg of the yeast protein extract and 1kg of chitosan are weighed, added into a stirring tank, and stirred and mixed to obtain a biological antioxidant of Example 8. The yeast protein extract is model FP4 of AngelYeast Co., Ltd. and the physical and chemical requirements are as follows: a total nitrogen content is 10.1% (by dry basic weight), an amino acid-state nitrogen content is 3.4% (by dry basic weight) and an amino acid composition is (by total weight of amino acids): 1.3% proline, 2.3% tryptophan, 1.2% histidine, 1.8% tyrosine, 0.8% methionine, 2.3% aspartic acid, 1.7% threonine, 1.1% serine, 3.2% glutamic acid, 0.8% glycine, 4.2% alanine, 1.7% valine, 0.7% isoleucine, 2.8% leucine, 2.5% lysine and 2.8% arginine, a proportion of a molecular weight distribution of low molecular weight peptides at 500-3000Da is 13.6%, a content of $Mn^2$ is 50 ppm, a content of $Fe^{2+}$ is 100 ppm and a content of $Mg^{2+}$ is 400 ppm.

**Example 9**

20kg of yeast protein extract, 15kg of chitosan, 7kg of glutathione, 15 kg of nucleic acid I+G and 3 kg of vitamin C are weighed, added into a stirring tank, and stirred and mixed to obtain a biological antioxidant of Example 1, wherein the yeast protein extract is model FP1 of AngelYeast Co., Ltd.

**Experimental example 1**

Comparative tests are carried out by adding the biological antioxidant prepared in Examples 1-9 of the present disclosure, vitamin C, sulfurous acid (sulfur dioxide is used to perform an antioxidant function), tannin and citric acid to Chardonnay raw wine, respectively, in an amount of 100 ppm on the basis of a weight of the Chardonnay raw wine, wherein the Chardonnay raw wine is prepared according to the following method: after removing stalks and crushing, Chardonnay wine grapes are squeezed to obtain juice, and the juice is clarified and separated to obtain clear juice, then the clear juice is inoculated with yeast for alcoholic fermentation, and after fermentation, the Chardonnay grape wine is obtained by filtration. After standing at room temperature for 6 months, the physical and chemical indexes and antioxidant indexes of the wine are determined according to the following method, and the test results are shown in Table 2.

The particular test method is as follows:

1. Measurement of alcoholic strength

It is conducted according to the first method-density bottle method specified in GB 5009.225-2016, and the sample is prepared with step 4.1.1.

2. Determination of residual sugars (counted as fructose, glucose, sucrose, maltose and lactose)

It is conducted according to the first method of high performance liquid chromatography specified in GB 5009.8-2016.

3. Determination of total acid

It is conducted according to the first method of acid-base indicator titration method specified in GB 12456-2021.

4. Determination of volatile acids

It is conducted according to the method for determination of volatile acids specified in 4.5 of GB/T 15038-2006.

5. Determination of browning index

4g of sample is randomly taken from different parts, added into 10ml of 80% ethanol solution, ground into homogenate, reacted for 0.5h at room temperature, stirred once every 5 min, then centrifuged for 10 min at 8000 r/min at 4 °C, and 80% ethanol solution is taken as blank control, supernatant is taken to determine light absorption value at 420 nm, calculation is performed according to the following formula:

$$\text{Browning index}\ (\text{Browning index}) = (A_1 - A_0)\ *V/M$$

In the formula:

$A_1$-light absorption value of the sample,
$A_0$-light absorption value of blank ethanol solution
V-Volume of extract solution (ml), and
M-mass of sample (g).

6. Determination of DPPH clearance rate

0.2mL of sample is taken and then added with 2mL of 0.1 mmol/L DPPH ethanol solution and 1.8mL of distilled water, and after reaction for 30min in the dark, light absorption value at a wavelength of 517 nm is determined. 2.2mL of ethanol and 1.8mL of distilled water are taken as reference solution to zero the spectrophotometer; 0.2mL of sample is taken, then added with 2mL of ethanol and 1.8mL of distilled water, protected from light and reacted for 30min as natural color comparison; 2 ml of 0.1 mmol/L DPPH ethanol solution, 0.2 mL of ethanol and 1.8 mL of distilled water are used as blank controls. The DPPH clearance rate is calculated according to the following formula

$$\text{DPPH clearance rate}/\% = [1 - (A_1 - A_2)/A_0] \times 100$$

In the formula:

A$_0$-light absorption value of the blank solution;
A$_1$--light absorption value of natural color of the sample;
A$_2$--light absorption value of the sample after DPPH removal.

7. Test of reducing power

0.2 mL of sample is measured, then added with 1 mL of distilled water, 2.5 mL of 0.2 mol/L phosphate buffer solution and 2.5 mL of 1% potassium ferricyanide, shaken well, and bathed in 50 °C water bath for 20min; then 1mL of trichloroacetic acid is added, shaken well, and centrifuged at 3000 r/min for 10 min, and then 2.5mL of supernatant is taken, then added with 2.5mL of distilled water and 0.5mL of 0.1% ferric chloride and shaken well, and then light absorption value at 700 nm is determined.

Table 2 Physical and chemical properties and antioxidant indexes of Chardonnay wine aged for 6 months

|  | Alcoholic strength (%) | Residual sugar (g/L) | Total acid (g/L) | Volatile acid (g/L) | Browning index | DPPH clearance rate (%) | Reducing power |
|---|---|---|---|---|---|---|---|
| Example 1 | 13.82 | 2.92 | 7.1 | 0.41 | 0.31 | 33.31 | 0.36 |
| Example 2 | 13.73 | 2.89 | 7.3 | 0.43 | 0.30 | 36.25 | 0.45 |
| Example 3 | 13.70 | 2.85 | 7.5 | 0.44 | 0.31 | 35.67 | 0.35 |
| Example 4 | 13.65 | 2.81 | 6.9 | 0.40 | 0.29 | 38.36 | 0.34 |
| Example 5 | 13.91 | 2.91 | 7.6 | 0.39 | 0.28 | 39.23 | 0.33 |
| Example 6 | 13.85 | 2.88 | 7.7 | 0.42 | 0.29 | 39.38 | 0.38 |
| Example 7 | 13.77 | 2.87 | 7.0 | 0.45 | 0.22 | 44.43 | 0.40 |
| Example 8 | 13.94 | 2.93 | 6.8 | 0.41 | 0.21 | 45.79 | 0.39 |
| Example 9 | 13.68 | 2.85 | 7.5 | 0.42 | 0.23 | 46.99 | 0.37 |
| No antioxidant | 13.78 | 2.84 | 7.2 | 0.43 | 0.39 | 24.39 | 0.31 |
| Vitamin C | 13.63 | 2.95 | 7.8 | 0.46 | 0.35 | 28.90 | 0.30 |
| Sulfur dioxide | 13.84 | 2.80 | 7.0 | 0.41 | 0.37 | 32.79 | 0.32 |
| Tannin | 13.92 | 2.93 | 7.5 | 0.44 | 0.36 | 31.55 | 0.33 |
| Citric acid | 13.88 | 2.87 | 8.9 | 0.43 | 0.38 | 29.89 | 0.31 |

It can be seen from Table 2 that the biological antioxidants of Examples 1-9 of the present disclosure have no effect on the physical and chemical performance of the Chardonnay wine, such as the alcoholic strength, residual sugar, total acid and volatile acid, and the browning index is reduced by 20-46%, the DPPH clearance rate is increased by 36-93%, and the reducing power is increased by 6.5-29%, compared with no antioxidant added; compared with the vitamin C, browning index decreases by 11-40%, the DPPH clearance rate increased by 15-62% and the reducing power increases by 10-30%; compared with sulfur dioxide, the browning index decreases by 16-43%, the DPPH clearance rate increases by 1.5-43% and the reducing power increases by 3.1-25%; compared with the tannin, the browning index decreases by 13-42%, the DPPH clearance rate increases by 5.6-49% and the reducing power increases by 0-36%; compared with the citric acid, the browning index decreases by 18-45%, the DPPH clearance rate increases by 11-57% and the reducing power increases by 9.6-45%; thus, the biological antioxidants of the present disclosure are able to significantly inhibit the oxidative browning of the Chardonnay wine, and are significantly superior to existing conventional antioxidants, and, in terms of DPPH clearance rate and reducing power, are superior to the vitamin C and the citric acid, and are equivalent to the sulfur dioxide and the tannin. Compared with Example 1, the yeast protein extract of Example 6 contains proline, tryptophan, histidine, tyrosine and methionine, the yeast protein extract of Example 7 contains more than 20% of proportion of the low molecular weight peptides with a number average molecular weight of 500-3000Da, the yeast protein extract of Example 8 contains 50 ppm of $Mn^{2+}$, 100 ppm of $Fe^{2+}$ and 400 ppm of , and the browning index, DPP clearance rate and reducing power of the yeast protein extract are superior to those of Example 1, and the biological antioxidants obtained in Examples 6-8 have better antioxidant properties.

**Experimental example 2**

Comparative experiments are carried out by adding the biological antioxidants prepared in Examples 1-9 of the present disclosure, vitamin C, sulphurous acid, tannin and citric acid to apple juice, each of which is added in an amount of 100 ppm based on the weight of the apple juice, wherein the apple juice is obtained by crushing and squeezing fresh apples and then clarifying.

After standing at room temperature for 7 days, the apple juice is performed with sensory analysis and color analysis according to the following methods;

1. Sensory analysis

Five professional sensory evaluators are invited to constitute an sensory appraisal group, and the evaluators conduct sensory evaluation on the numbered samples, and conduct comprehensive evaluation from multiple dimensions of color, aroma and taste, respectively. The detailed rules for sensory evaluation are shown in Table 3. After scoring, the results are counted and recorded according to the average value, as shown in Table 4.

Table 3 Detailed rules and scores of sensory evaluation

| Items and scores | Description of evaluation criteria | Score |
|---|---|---|
| Color (30 points) | Light yellow green, gramineous yellow; clear and transparent | 27-30 |
| | Lemon yellow, light golden yellow; clear and transparent | 24-26 |
| | Gold, dark yellow, turbid and loss of light | 20-23 |
| Aroma (40 points) | Pure and strong fruity aroma, long lasting | 36-40 |
| | Apparent fruity aroma, slightly oxidative | 32-35 |
| | Fragrant and thin, with peculiar smell and oxidation smell | 28-31 |
| Taste (30 points) | Clean wine body, refreshing and lively, elegant and light, with typical characteristics | 27-30 |
| | Strong wine body, rich and long-lasting, with structural sense | 24-27 |
| | Wine imbalance, irritation, taste disharmony | 20-23 |

Table 4 Sensory evaluation results for apple juice

| Group | Color | Aroma | Taste | Total score |
|---|---|---|---|---|
| Example 1 | 24 | 33 | 24 | 81 |
| Example 2 | 23 | 33 | 25 | 81 |
| Example 3 | 25 | 34 | 25 | 84 |
| Example 4 | 26 | 35 | 26 | 87 |
| Example 5 | 26 | 36 | 26 | 88 |
| Example 6 | 27 | 36 | 27 | 90 |
| Example 7 | 28 | 36 | 26 | 90 |
| Example 8 | 26 | 35 | 27 | 88 |
| Example 9 | 27 | 37 | 28 | 92 |
| No antioxidant | 22 | 31 | 24 | 77 |
| Vitamin C | 23 | 32 | 24 | 79 |
| Sulfur dioxide | 23 | 33 | 25 | 81 |
| Tannin | 24 | 32 | 24 | 80 |
| Citric acid | 22 | 31 | 23 | 76 |

2. Color analysis method

The L*, a*, b*, c* and H* of apple juice are measured by multi-function colorimeter, wherein L* indicates brightness in CIELab model; a* represents red and green, a*>0 tends to red and a*<0 tends to green; B* represents yellow and blue, b*>0 tends to yellow, b*<0 tends to blue, c* represents color fullness, H* represents hue (color intensity), and the test results are shown in Table 5.

Table 5 Browning results of apple juice after 7 days of storage

|  | a* | b* | L* | c* | H* |
|---|---|---|---|---|---|
| Example 1 | -1.43 | 9.12 | 91.62 | 8.26 | -1.39 |
| Example 2 | -1.51 | 8.99 | 91.21 | 7.74 | -1.32 |
| Example 3 | -1.55 | 9.35 | 91.56 | 7.41 | -1.29 |
| Example 4 | -1.62 | 8.47 | 91.88 | 8.36 | -1.37 |
| Example 5 | -1.65 | 8.41 | 91.74 | 8.51 | -1.38 |
| Example 6 | -1.61 | 8.61 | 91.71 | 8.23 | -1.39 |
| Example 7 | -1.89 | 7.65 | 91.68 | 9.27 | -1.48 |
| Example 8 | -1.85 | 7.71 | 91.56 | 9.33 | -1.54 |
| Example 9 | -1.87 | 7.23 | 91.34 | 9.48 | -1.51 |
| No antioxidant | -1.35 | 9.68 | 91.76 | 7.16 | -1.19 |
| Vitamin C | -1.37 | 9.16 | 91.56 | 8.19 | -1.17 |
| Sulfur dioxide | -1.36 | 9.11 | 91.76 | 7.68 | -1.20 |
| Tannin | -1.39 | 9.25 | 91.68 | 8.55 | -1.25 |
| Citric acid | -1.33 | 9.27 | 91.82 | 7.43 | -1.22 |

As can be seen from Table 4, the addition of the biological antioxidants of Examples 1-9 of the present disclosure to apple juice significantly improves the color and aroma of apple juice with a higher comprehensive score after sensory evaluation compared with the absence of antioxidants; compared with conventional antioxidants, the biological antioxidants of the present disclosure are superior to vitamin C, tannin and citric acid, and are equivalent to sulfur dioxide, but sulfur dioxide has the potential risks of becoming allergens against human health, and part of the efficacy is affected by external conditions such as pH, temperature and alcoholic strength, while the components of the biological antioxidants of the present disclosure have natural properties, are non-toxic and harmless to the human body, have no residue, have no damage to the original structure and nutritional value of food, and have no secondary potential risk.

As can be seen from Table 5, the apple juice added with the biological antioxidants of Examples 1-9 of the present disclosure have a darker green shade and a lower yellow shade than the apple juice without the addition of antioxidants and with the conventional antioxidants of the prior art, indicating that the biological antioxidants of the present disclosure can significantly improve the adverse effects of apple juice oxidation, color browning, and significantly inhibit the aging and browning of apple juice.

**Experimental example 3**

By weight of the raw wine, the biological antioxidant prepared in Example 1 of the present disclosure is added to the kiwi wine at 0.025% by weight of the wine, designated as 2#, the biological antioxidant prepared in Example 1 of the present disclosure is added to the kiwi wine at 0.05%, designated as 3#, the raw wine without the biological antioxidant is designated as 1#, and the vitamin C is added to the kiwi wine at 0.025%, designated as 4#. The raw kiwi wine is prepared according to the following method: the kiwi is crushed and squeezed to obtain juice, and the juice is clarified to obtain clear juice, then the clear juice is inoculated with yeast for alcoholic fermentation, and the raw kiwi wine is obtained after filtration. After standing at room temperature for 6 months, the changes of aroma compounds are detected as follows:

8 mL wine sample is taken and placed in a 20 mL extraction bottle, added with 2.5g of NaCl and 10 μL of 2-octanol solution (88.2 mg/L) as internal standard, sealed, placed in a 40 °C water bath and magnetically stirred for 30 min, and then performed with headspace extraction for 30 min, and the extraction needle is taken and inserted into a gas chromatography-mass spectrometry (GC-MS) for resolution. The test results are shown in Table 6.

Table 6 Results of aroma component analysis of kiwi wine

| Number | Total aroma/(μg/L) | Alcohols/ (μg/L) | Percentage /% | Esters/( μg/L) | Percentage/ % | Terpenes/(μg/L) | Percentage/% | Acids/(μg/L) | Percentage/ % | Other classes /(μg/L) | Percentage/ % |
|---|---|---|---|---|---|---|---|---|---|---|---|
| 1# | 5397.89 | 1673.62 | 0.31 | 2930.5 | 0.54 | 52.69 | 0.01 | 660.93 | 0.12 | 80.15 | 0.0 1 |
| 2# | 5758.42 | 1937.63 | 0.34 | 3231.32 | 0.56 | 49.58 | 0.01 | 419.1 | 0.07 | 120.79 | 0.0 2 |
| 3# | 7893.89 | 2470.68 | 0.31 | 4795.97 | 0.61 | 64.1 | 0.01 | 438.16 | 0.06 | 124.98 | 0.0 2 |
| 4# | 5468.22 | 1891.34 | 0.32 | 3012.87 | 0.55 | 50.46 | 0.01 | 609.13 | 0.09 | 98.67 | 0.0 1 |

It can be seen from Table 6 that compared with no antioxidant, adding 0.025% of the biological antioxidant of Example 1 of the present disclosure to the raw kiwi wine increases the kiwi wine by 6.7% in total aroma content, the alcohols increase by 15.8%, the esters increase by 10.3%, the terpenes decrease by 5.9%, the acids decrease by 36.6% and the other substances increase by 51% after standing for 6 months at room temperature; adding 0.05% of the biological antioxidant of Example 1 of the present disclosure to the raw kiwi wine increases the kiwi wine by 46.2% in total aroma content, the alcohols increase by 47.6%, the esters increase by 63.7%, the terpenes increase by 21.7%, and the acids decrease by 33.7%, and the others increase by 56% after standing at room temperature for 6 months; compared with the addition of vitamin C, adding the biological antioxidant of Example 1 of the present disclosure to the raw kiwi wine increases total aroma content of kiwi wine by 5.3%, the alcohols increase by 2.4%, the esters increase by 7.3%, the terpenes decrease by 1.7%, acids by 31.1% and other substances decrease by 22.4% after standing for 6 months at room temperature. The results show that the aroma of kiwi wine is retained more, the quality of wine body is better, the consumption of kiwi wine is less and the ratio of performance to price is higher after addition of the biological antioxidants of the present disclosure.

In summary, the biological antioxidant for fruit juice and fruit wine in the present disclosure is beneficial to inhibiting the yellowing and browning of the fruit juice and fruit wine, improving the beauty of the color and aroma of the fruit juice and fruit wine, and improving the sensory quality. It also increases the drinking comfort of the fruit juice and fruit wine and enables the fruit juice and fruit wine to be mellow and full in taste and lasting in aftertaste. In addition, while improving the quality of the fruit juice and fruit wine, the present disclosure also eliminates the tedious process, high cost, unstable quality and safety risks caused by the high-temperature and oxygen-barrier treatment, meeting the objectives of safe production, high-quality development and healthy drinking by consumers in the fruit juice and fruit wine manufacturing enterprises.

What has been described above is merely a preferred examples of the disclosure and is not intended to limit the disclosure in any way. Thus, it is intended that the scope of protection of the present disclosure cover the modifications, equivalents, and improvements falling within the spirit and principle of the disclosure.

## Claims

1. A biological antioxidant for fruit juice and fruit wine, comprising the following components in parts by weight: 1-70 parts of yeast protein extract and 1-30 parts of chitosan.

2. The biological antioxidant according to claim 1, comprising the following components in parts by weight: 10-30 parts of yeast protein extract and 10-20 parts of chitosan.

3. The biological antioxidant according to claim 1 or 2, wherein amino acids in the yeast protein extract comprise one or a combination of two or more selected from the group consisting of proline, tryptophan, histidine, tyrosine, and methionine; preferably, the amino acids comprise 0-1.3wt% proline, 0-3.3wt% tryptophan, 0.51-1.3wt% histidine, 1.67-4wt% tyrosine and 0-0.8wt% methionine on the basis of a total weight of the amino acids; further preferably, the amino acids comprise 0.75-1.3wt% proline, 2.3-3.3wt% tryptophan, 0.58-1.2wt% histidine, 1.67-1.8wt% tyrosine and 0.69-0.8wt% methionine.

4. The biological antioxidant according to any one of claims 1 to 3, wherein a proportion of low molecular weight peptides with a molecular weight distribution of 500-3000Da in the yeast protein extract is more than 13%, preferably more than 20%.

5. The biological antioxidant according to any one of claims 1 to 4, wherein the yeast protein extract contains one or a combination of two or more selected from the group consisting of manganese ions, iron ions and magnesium ions; preferably, the yeast protein extract contains manganese ions, iron ions and magnesium ions; further preferably, a content of manganese ions is 50-400 ppm, a content of iron ions is 50-400 ppm and a content of magnesium ions is 50-400 ppm.

6. The biological antioxidant according to any one of claims 1 to 5, wherein the biological antioxidant further comprises a peptide substance; preferably, the peptide substance is one or a combination of two or more selected from the group consisting of glutamylcysteine, honuocysteine, acetylcysteine, cysteine, and glutathione, perferably glutathione; preferably, the peptide substance is present in 1-15 parts by weight.

7. The biological antioxidant according to any one of claims 1 to 6, wherein the biological antioxidant further comprises nucleic acid; preferably, the nucleic acid is present in 1-15 parts by weight.

8. The biological antioxidant according to any one of claims 1 to 7, wherein the biological antioxidant further comprises vitamin C; preferably, the vitamin C is present in 1-5 parts by weight.

9. The biological antioxidant according to any one of claims 1 to 8, wherein the yeast protein extract is 20-30 parts, the chitosan is 10-15 parts, the glutathione is 7-15 parts, the nucleic acid is 1-15 parts, and the vitamin C is 3-5 parts.

10. A preparation method for the biological antioxidant according to any one of claims 1 to 9, comprising mixing various components to obtain the biological antioxidant.

11. Use of the biological antioxidant according to any one of claims 1 to 9 or of a biological antioxidant prepared with the preparation method according to claim 10 in food products, preferably in fruit juice and fruit wine.

12. The use according to claim 11, wherein the biological antioxidant is added to the fruit juice and fruit wine in an amount of 0.02-0.05wt%.

## INTERNATIONAL SEARCH REPORT

| International application No. |
|---|
| **PCT/CN2023/089668** |

| **A.** | **CLASSIFICATION OF SUBJECT MATTER** |
|---|---|
| | C12G3/024(2019.01)i;  C12G3/04(2019.01)i;  C12G1/022(2006.01)i;  C12G1/00(2019.01)i;  A23L2/02(2006.01)i |

According to International Patent Classification (IPC) or to both national classification and IPC

| **B.** | **FIELDS SEARCHED** |
|---|---|

Minimum documentation searched (classification system followed by classification symbols)

IPC:C12G,A23L,C07D

Documentation searched other than minimum documentation to the extent that such documents are included in the fields searched

Electronic data base consulted during the international search (name of data base and, where practicable, search terms used)

DWPI, CNTXT, CNABS, WPABSC, ENTXTC, CJFD: 果汁, 果酒, 饮料, 饮品, 酵母, 蛋白, 提取物, 壳聚糖, 脱乙酰甲壳素, 聚葡萄糖胺, 核酸, 核苷酸, 维生素C, 抗坏血酸, 抗氧化, fruit, juice, wine, beverage, drink, yeast, protein, extract+, chitosan, polyglucosamine, nucleic acid+, nucleotide+, vitamin C, ascorbic acid, antioxidants

| **C.** | **DOCUMENTS CONSIDERED TO BE RELEVANT** | |
|---|---|---|

| Category* | Citation of document, with indication, where appropriate, of the relevant passages | Relevant to claim No. |
|---|---|---|
| PX | CN 114806776 A (ANGEL YEAST CO., LTD.) 29 July 2022 (2022-07-29) <br> claims 1-12 | 1-12 |
| Y | CN 109401895 A (AGRICULTURAL PRODUCTS PROCESSING INSTITUTE, GUANGXI ACADEMY OF AGRICULTURAL SCIENCES) 01 March 2019 (2019-03-01) <br> claims 1-7 | 1-12 |
| Y | US 2010004329 A1 (TOYO SHINYAKU CO., LTD.) 07 January 2010 (2010-01-07) <br> description, paragraphs 60-64 | 1-12 |
| Y | JP 2022054483 A (SHOKO LIFE TECH CO., LTD.) 07 April 2022 (2022-04-07) <br> claims 1-10 | 5-12 |
| A | CN 105087243 A (MAANSHAN XINZHOU GRAPE PROFESSIONAL COOPERATIVES) 25 November 2015 (2015-11-25) <br> description, paragraphs 6-7 | 1-12 |
| A | CN 105176741 A (JIANGNAN UNIVERSITY) 23 December 2015 (2015-12-23) <br> claims 1-10 | 1-12 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **25 July 2023** | **12 August 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/089668**

| Patent document cited in search report | | | Publication date (day/month/year) | Patent family member(s) | | | Publication date (day/month/year) |
|---|---|---|---|---|---|---|---|
| CN | 114806776 | A | 29 July 2022 | None | | | |
| CN | 109401895 | A | 01 March 2019 | None | | | |
| US | 2010004329 | A1 | 07 January 2010 | US | 2011159128 | A1 | 30 June 2011 |
| | | | | WO | 2006064550 | A1 | 22 June 2006 |
| | | | | CA | 2590849 | A1 | 22 June 2006 |
| JP | 2022054483 | A | 07 April 2022 | None | | | |
| CN | 105087243 | A | 25 November 2015 | None | | | |
| CN | 105176741 | A | 23 December 2015 | None | | | |

Form PCT/ISA/210 (patent family annex) (July 2022)

**EP 4 491 702 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 50092252016 A
- GB 500982016 A
- GB 124562021 A
- GB 150382006 A